# EUROPEAN PATENT SPECIFICATION

(11) **EP 3 650 720 B1**
(45) Date of publication and mention of the grant of the patent: **29.12.2021**
(21) Application number: 19207193.4
(22) Date of filing: 05.11.2019
(51) Int. Cl.: F16C 13/00

(54) **ROLLER PROVIDED WITH IMPROVED QUICK-RELEASE HUB**
ROLLER AUSGESTATTET MIT EINER SCHNELL ZU ÖFFNENDE NABE
ROUE ÉQUIPEE D'UN MOYEU À OUVERTURE RAPIDE

(30) Priority: 09.11.2018 IT 201800010222
(43) Date of publication of application: 13.05.2020
(73) Proprietor: PMI S.r.l., 33080 Fiume Veneto (PN) (IT)
(72) Inventor: PADOAN, Stefano, 33080 Fiume Veneto (IT)
(74) Representative: Giugni, Valter

(56) References cited:
- EP-A1- 0 694 703
- DE-A1-102007 053 185
- DE-A1-102015 101 073
- FR-A7- 2 177 283
- GB-A- 2 191 547

## Description

### TECHNICAL FIELD OF THE INVENTION

The present invention relates to a roller used, preferably in industrial contexts, to apply a pressure on the surface of an object moving within an apparatus. Specifically, the present invention relates to a roller provided with quick-release hub used to apply a pressure on a surface of an object that is moving within an apparatus such as a print roller, a plate flattening roller, a laminating roller, a roller to obtain a determined surface finish on the surface of an object, a roller to fix a coating, a roller for conveying or other production processes and, preferably, a roller used in an apparatus for veneering wood slabs.

### STATE OF THE PRIOR ART

In industrial fields, different types of rollers are known, used to apply a pressure on a surface of a moving object. Typically, the rollers consist of an outer sleeve of cylindrical shape, preferably made of elastomeric material, and of a central body, i.e. a hub, which supports the sleeve and which keeps the roller connected to a suitable rotation shaft of the apparatus on which it is installed and which, moreover, transfers a pressure on the surface of the moving object.

Generally, the sleeve and the central body, i.e. the hub, are made of different materials, such as respectively an elastomer and a metal or, respectively, an elastomer and a thermoplastic resin. To ensure that the sleeve and the central body, i.e. the hub, are mutually integral in operation, i.e. during the rotation of the roller installed on the shaft of the apparatus, it is necessary to apply on the contact surface between the sleeve and the central body a substance, or a composition, for gluing the material of the sleeve, for example an elastomer, and the material of the central body, for example a metal.

While use of a gluing substance between the materials allows to make the sleeve and the central body integral to each other, this solution still has some drawbacks.

First of all, depending on the characteristics of the materials used to make the elements that constitute the roller, i.e. the sleeve and the central body, it is necessary to appropriately select the gluing substance to ensure a durable adhesion in operation and, hence, to ensure the durability of the roller.

The gluing substance is selected according to the chemical nature of the materials to be mutually fixed and, moreover, it is not always possible to ensure that the degree of adhesion obtained is always adequate for the application. For example, a sleeve made of an appropriate elastomer, having a given hardness, may not be adequately fixed to a central body, made of an appropriate thermoplastic resin of a given chemical nature and/or of a given rigidity etc., by a gluing substance that may have a relatively low cost.

Furthermore, using a gluing substance needs an additional machining step in the process of assembling the roller, with consequent increased time and costs for its production.

Moreover, it is possible that the environmental operating conditions, such as temperature or the use of processing substances, can deteriorate the characteristics of the gluing substance that fixes the sleeve to the central body.

For example, the combination of different operating conditions, such as the pressure applied on the roller through the shaft and the use of a solvent during the machining operations, can cause the gluing substance to deteriorate.

In addition, in operating conditions, the roller deteriorates because of the friction that is generated by contact with the moving object and in particular this takes place on the outer peripheral surface of the sleeve that is in contact with the moving object. Hence, in this state, since the gluing substance irreversibly fixes the sleeve to the central body, it is necessary to replace the entire roller even when the only element found to be deteriorated is the sleeve and not the central body, with consequent waste of costs and materials.

In the state of the art, there are patent applications related to rollers that comprise mechanical fixing systems between a replaceable sleeve and a central body, i.e. a hub, so as to avoid use of a gluing substance between the material of the sleeve and the material of the central body.

For example, the patent document US4178664 describes a roller in which a sleeve is adapted to engage the outer peripheral surface of a central body which is provided with locking screws adapted to fix the sleeve and the central body to each other, thus preventing rotary and longitudinal relative motion. However, the roller described herein does not assure durable fixing because the fixing, i.e. coupling, area between the sleeve and the central body consists of the section of the locking screw and, hence, the fixing area is relatively small with respect to the contact area between the sleeve and the central body. For this reason, in operating conditions, the forces exerted on the roller, induced by rolling and by the pressure applied on the roller, are transmitted only in the fixing area and can induce tearing of the material of which the sleeve is made, which typically is an elastomer or otherwise a material of lower hardness than the material of which the central body and the locking screws are made. Moreover, the locking screws extend in radial direction of the roller and, hence, they can modify characteristics, such as the compressibility, of the corresponding portion of sleeve, consequently making non-homogeneous the characteristics along the outer peripheral surface of the roller, which is the portion in contact with the moving object.

The patent document US20140113784 describes a roller with a quick-release system that couples a hub, i.e. a central body, to two flanges fixed with screws and adapted to retain a sleeve. However, the roller described therein provides fixing the hub to the sleeve by friction between a portion of the flanges and a portion of the sleeve and, hence, the degree of fixing of the sleeve to the hub is not reliable and it is a function of the degree of tightening of the screws.

The patent document US20060146111 describes a roller with a quick-release system that couples a central body, to a sleeve by means of flanges. The flanges comprise tabs that engage respective recesses formed on the edges of the sleeve. However, these recesses extend along the entire thickness of the sleeve, modifying its characteristics, such as compressibility, in the corresponding portion. Moreover, the recesses are formed on the inner peripheral surface of the sleeve and, hence, they define angles that cause a weakening thereof. In operating conditions, forces are transmitted to the roller that can induce tearing of the material whereof the sleeve is made because these angles facilitate the generation and the propagation of a crack, i.e. they represent weakening points of the sleeve.

In the patent documents referenced above, bearings may be provided that facilitate the rolling of the roller around the shaft of the apparatus on which it is installed. It is known that the bearings deteriorate during utilization and, in particular operating condition, a rapid deterioration of the bearing may be promoted, for example in the presence of a processing substance such as a solvent, glue, powders or the like, or because of unforeseen contaminating agents during processing.

In the state of the art, there are patent applications relating to rollers that comprise a system for protecting the bearings so as to reduce the likelihood of contact between the bearings and the outside environment which may contain processing substances and/or contaminating agents.

For example, the patent documents US8418316 and US5590935 describe, in different sectors of the art, wheels comprising a hub, bearings housed in the hub and lids adapted to protect the bearings against contaminating agents, thus prolonging their durability. However, these patent documents do not provide any system for quickly engaging the sleeve to the hub. DE 10 2015 101073 discloses a roller according to the preamble of claim 1, a replaceable sleeve and a hub assembly according to the preamble of claim 11.

Consequently, there is a need to obtain a roller provided with sleeve and with quick release hub that overcomes the drawbacks described above.

### SUMMARY OF THE INVENTION

The task of the present invention is to realize a roller provided with sleeve and with quick release hub that allows a mechanical fixing or coupling between the sleeve and the hub so as to avoid the use of a gluing substance between them. Moreover, the roller must provide a hub whose conformation assures the protection of bearings with respect to processing substances, such as solvents, glues, dusts, or the like or with respect to contaminating agents.

Within the task described above, one purpose of the present invention is to provide a roller in which the coupling between the sleeve and the hub is obtained by means of a connecting system comprising extensions, formed on the hub, and corresponding recesses, formed on the sleeve, adapted to mutually engage.

An additional purpose is to provide a roller in which said recesses do not extend in radial direction with respect to the axis of the roller and do not form angle on the inner and/or outer peripheral surface of the sleeve so as to prevent, in operating conditions, tearing of the material whereof it is made.

An additional purpose is to provide a roller in which the fixing, or coupling, area between the sleeve and the hub is a relatively extended portion with respect to the inner peripheral surface of the sleeve that is in contact with the hub. In this way, in operating conditions, the forces exerted on the roller, induced by rolling and by the pressure applied thereon, are transmitted on a relatively extended fixing area so as to distribute such forces more homogeneously and, consequently, to prevent tearing of the material whereof the sleeve is made.

An additional purpose is to provide a roller in which the characteristics of the sleeve, such as compressibility or rigidity, are homogeneous on the outer peripheral surface of the sleeve that is the portion of the roller in contact with the moving object.

An additional purpose is to provide a roller in which the hub is formed so as to receive bearings and to close them with respect to the environment outside the roller so as to make it unlikely for the bearings to come in contact with processing substances or contaminating agents that are provided in operating conditions.

The task and the purposes indicated above, and others that will be more readily apparent in the remainder of the description, are achieved by a roller provided with sleeve and quick release hub as defined in the independent claims.

### BRIEF DESCRIPTION OF THE FIGURES

The additional features and the advantages of the roller provided with sleeve and quick release hub of this invention shall become more readily apparent in the following description relating to embodiments given purely by way of non-limiting example with reference to the following figures, in which:
- FIG. 1 is a first perspective view of a roller provided with sleeve and with quick release hub in a preferred embodiment of the present invention;
- FIG. 2 is a second perspective view of the roller of FIG. 1;
- FIG. 3 is an exploded perspective view of elements comprising the roller of FIG. 1;
- FIG. 4 is a section view of the roller taken along a plane containing an axis X-X and a line A-A of FIG. 1;
- FIG. 5 is a perspective section view of the roller taken along a plane containing the axis X-X of FIG. 1
- FIG. 6 is an exploded perspective view of a roller provided with sleeve and with quick release hub in an example not part of the present invention.

### DETAILED DESCRIPTION OF THE INVENTION

The following description of the present invention relates to a roller provided with replaceable sleeve and with quick release hub in its preferred embodiment, however, the invention is not limited in its application to the construction details and to the configuration of the elements described and illustrated in the figures. The description and the figures are provided to allow a person skilled in the art to implement and use the present teaching.

Additional variants of the present invention are possible and the person skilled in the art will appreciate that the teachings deriving from the preferred embodiment can be applied to rollers having different shapes from the one described in the present invention, as defined in the appended claims. For example, in the following description the roller, the sleeve and the hub will preferably have substantially cylindrical shape, however the sleeve may have cylindrical shape with edges rounded at the outer peripheral surface or the roller may have toroidal or similar shape.

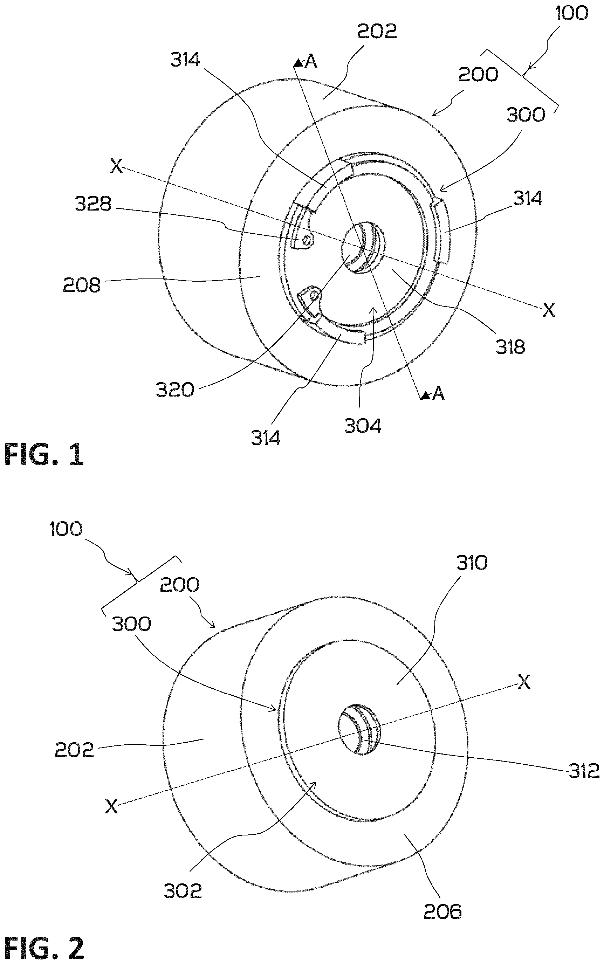

FIGS. 1, 2 and 3 show respectively a first perspective view, a second perspective view and an exploded view of a roller 100 provided with a replaceable sleeve and with a quick release hub assembly according to a preferred embodiment of the present invention.

Specifically, the roller 100 comprises a replaceable sleeve 200 shaped as a hollow cylinder having two open bases, and a hub assembly 300 adapted to engage the cavity of the sleeve 200. The sleeve 200 and the hub assembly 300 have a common axis that corresponds to a rotation axis X-X of a shaft, of an apparatus not shown, on which it is installed and around which the roller 100 rotates. Moreover, the sleeve 200 is made with an elastomeric material while the hub assembly 300 is preferably made with a thermoplastic resin.

In this embodiment, both the sleeve 200 and the hub assembly 300 are formed, preferably, with injection molding techniques, however it is possible to use different forming techniques, such as, for the hub assembly 300, thermoforming. Specifically, the sleeve 200 is formed in a single piece with only one material, elastomeric. Advantageously, in this way the manufacture of the sleeve 200 is simple and comprises a single forming process.

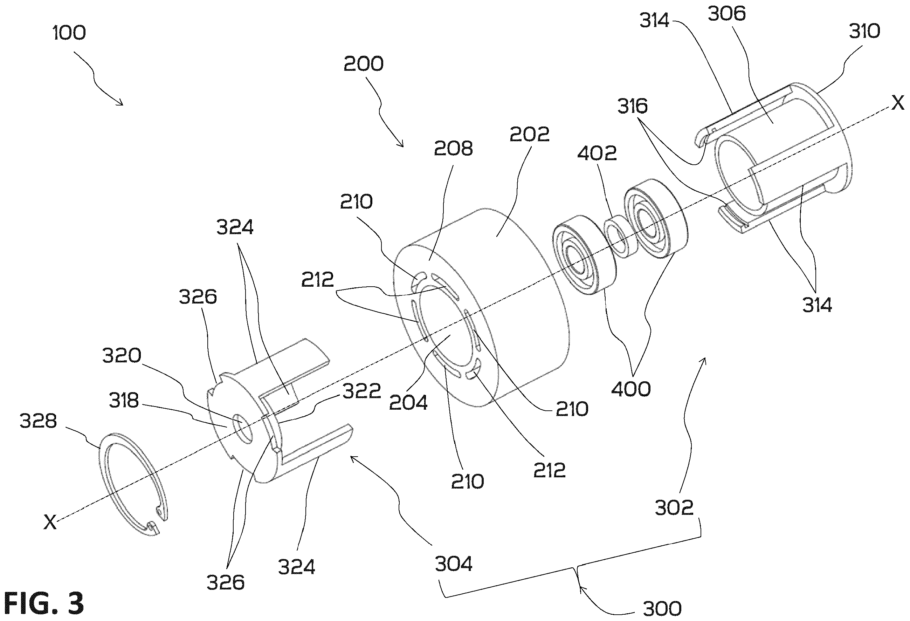

The sleeve 200 comprises an outer peripheral surface 202, which defines the outer peripheral surface of the roller 100, and an inner peripheral surface 204 (see FIG. 3), which defines the cavity of the sleeve 200. The outer peripheral surface 202 and the inner peripheral surface 204 are connected to each other by means of a first base surface 206 and a second base surface 208 that are substantially parallel to each other, are substantially perpendicular to the axis X-X, and they are shaped substantially as a circular ring. Specifically, the outer peripheral surface 202, the inner peripheral surface 204, the first base surface 206 and the second base surface 208 define the body of the sleeve 200.

Moreover, still referencing FIGS. 1, 2 and 3, the sleeve 200 comprises on each of the first base surface 206 and of the second base surface 208, respectively, first recesses 210 and second recesses 212. The first recesses 210 and the second recesses 212 are preferably formed so that the surfaces of the recesses are distinct, or separate, from the outer peripheral surface 202 and from the inner peripheral surface 204 of the sleeve 200. In other words, the first recesses 210 and the second recesses 212 are formed so as to extend inside the body of the sleeve 200, i.e. the contours of the openings of the first recesses 210 and of the second recesses 212 are at a non-zero distance from the outer peripheral surface 202 and from the inner peripheral surface 204 when seen from a direction along the axis X-X. Advantageously, in this state, the recesses do not form angles on the outer peripheral surface 202 and on the inner peripheral surface 204 of the sleeve 200 but form, instead, closed contours corresponding to the openings of the first recesses 210 and of the second recesses 212, respectively, on the first base surface 206 and on the second base surface 208 of the sleeve 200.

Specifically, the first recesses 210 and the second recesses 212 are formed so as to extend inside the body of the sleeve 200 along a direction parallel to the axis X-X, i.e. the axes of the first recesses 210 and of the second recesses 212 are parallel to the axis X-X.

In this preferred embodiment, the first recesses 210 and the second recesses 212 are, preferably, three first recesses 210 and three second recesses 212 and, moreover, they are through holes that connect the first base surface 206 to the second base surface 208.

In this embodiment, the first recesses 210 and the second recesses 212 are formed, still more preferably, alternately in angular positions that are substantially symmetrical, or equidistant, with respect to a rotation around the axis X-X and, moreover, at a same distance therefrom. In other words, the first recesses 210 and the second recesses 212 are formed so that one of the first recesses 210 is adjacent to two of the second recesses 212, and vice versa, and, moreover, so that their axes are in angular positions that are symmetric, or equidistant, with respect to a rotation around the axis X-X and at a same distance from this axis.

Lastly, the first recesses 210 and the second recesses 212 preferably have a same section that, in this embodiment, is substantially rectangular arched, when taken along a plane orthogonal to the axis X-X, in which the radius of curvature of the arc is equal to that of a circumference coaxial to the axis of the sleeve 200. In this state, the portions of surfaces of the first recesses 210 and of the second recesses 212, which are symmetrical with respect to a rotation around the axis X-X, are at a same distance from the outer peripheral surface 202 of the sleeve 200.

Still referencing FIGS. 1, 2 and 3, the hub assembly 300 comprises a first hub portion 302 and a second hub portion 304 having a common axis coinciding with the axis X-X.

Specifically, the first hub portion 302 comprises a hollow body 306 (see FIG. 3), preferably shaped as a hollow cylinder having the two open bases, which is adapted to engage, preferably to measure, the inner peripheral surface 204 of the sleeve 200 and, moreover, has a height, i.e. an extension along the axis X-X, preferably equal to the distance between the first base surface 206 and the second base surface 208 of the sleeve 200.

The cavity of the hollow body 306 is adapted to receive at least a roller bearing 400 (in this embodiment, there are two bearings) and, possibly, a spacer ring 402 interposed between the bearings 400. Moreover, the hollow body 306, the bearings 400 and the spacer ring 402 have a common axis coinciding with the axis X-X and the cavity of the hollow body 306 is formed so that the lateral surfaces of the bearings 400 abut against the surface of the cavity of the hollow body 306.

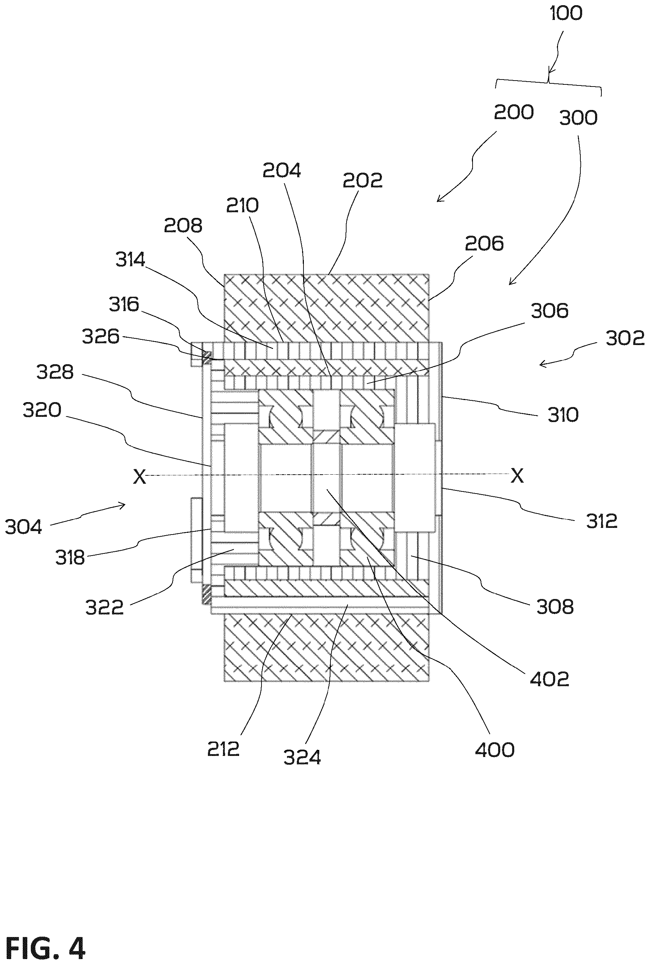

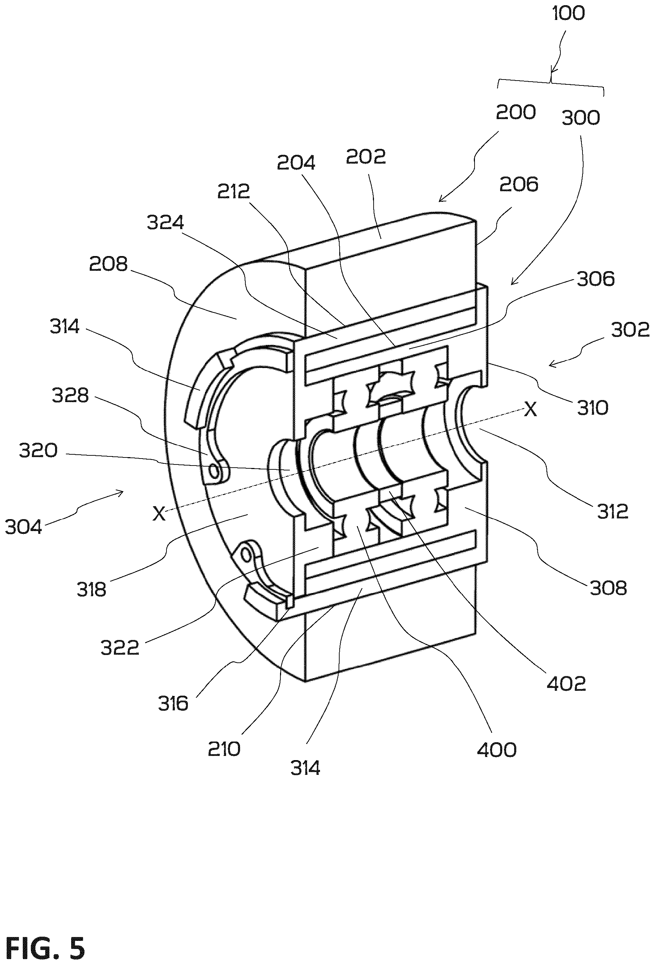

Referencing FIGS. 4 and 5, which show respectively a view of a section of the roller 100, taken along a plane containing the axis X-X and a line A-A perpendicular thereto in FIG. 1, and a perspective view of a section of the roller, the first hub portion 302 also comprises a first abutment ring 308, preferably integral with the hollow body 306, which is formed at a first opening of the hollow body 306. As explained below, the first abutment ring 308 is adapted to operatively abut against one of the bearings 400.

Referencing FIGS. 3, 4 and 5, at the first opening of the hollow body 306, a first flange 310 is provided that, preferably, is integral to the hollow body 306, has disc shape, is coaxial to the hollow body 306 and has a first central through hole 312. Moreover, from the peripheral edge of the first flange 310 departs at least a first extension 314 that extends parallel to the axis X-X and distanced radially from the hollow body 306.

The number of the first extensions 314 is preferably equal, i.e. corresponds, to the number of the first recesses 210 and, in this preferred embodiment, there are three first extensions 314 of the first hub portion 302.

Specifically, the diameter of the first flange 310 is such that the distance of the axis of the first extensions 314 from the center of the first flange 310 is equal to the distance of the axis of each of the first recesses 210 from the axis of the sleeve 200. Moreover, the section of the first extensions 314 is complementary to the section of the first recesses 210 and the axes of the first extensions 314 are at an angular distance from each other that is equal to that between the axes of the first recesses 210 with respect to a rotation around the axis X-X. In other words, when the axis of the first flange 310 coincides with the axis X-X, the first extensions 314 of the first hub portion 302 are adapted to engage the first recesses 210 of the sleeve 200.

In this embodiment, the length of the first extensions 314, i.e. the extension of the first extensions 314 along the direction parallel to the axis X-X, is preferably greater than the distance between the first base surface 206 and the second base surface 208 of the sleeve 200. Moreover, the first extensions 314 comprise each, at the distant end from the first flange 310, an engagement seat 316 (see FIG. 3) that is a channel formed on the surface of the extension 314 that faces the axis of the first flange 310 and whose direction lies on a plane orthogonal to the axis X-X. The engagement seats 316 are adapted to receive a portion of a retaining element, as will be described below.

Still referencing FIGS. 3, 4 and 5, the second hub portion 304 of the hub assembly 300 comprises a second flange 318, with preferably equal shape to that of the first flange 310, i.e. it has disk shape and it has a second central through hole 320.

The second hub portion 304 further comprises a second abutment ring 322 that is preferably formed integral with the second flange 318, has an axis coinciding with the axis of the second flange 318 and is adapted to slidably engage a portion of the cavity of the hollow body 306 through a second opening thereof.

Moreover, from the peripheral edge of the second flange 318 departs at least a second extension 324 that extends parallel to the axis X-X and, in use, distanced radially from the hollow body 306. The number of the second extensions 324 is preferably equal, i.e. corresponds, to the number of the second recesses 212 of the sleeve 200 and, in this preferred embodiment, there are three second extensions 324 of the second hub portion 304.

Specifically, the diameter of the second flange 318 is such that the distance of the axis of the second extensions 324 from the center of the second flange 318 is equal to the distance of the axis of each of the second recesses 212 from the axis of the sleeve 200. Moreover, the section of the second extensions 324 is complementary to the section of the second recesses 212 and the axes of the second extensions 324 are at an angular distance from each other that is equal to that between the axes of the second recesses 212 with respect to a rotation around the axis X-X. In other words, when the axis of the second flange 318 coincides with the axis X-X, the second extensions 324 of the second hub portion 304 are adapted to engage the second recesses 212 of the sleeve 200.

In this embodiment, the length of the second extensions 324, i.e. the extension of the second extensions 324 along the direction parallel to the axis X-X, is preferably equal to the distance between the first base surface 206 and the second base surface 208 of the sleeve 200.

Moreover, referencing FIG. 3, on the peripheral edge portions of the second flange 318, which are included between the two mutually adjacent second extensions 324, are formed grooves 326 adapted to operatively receive by shape coupling a portion of the sections of the first extensions 314, as described below.

Lastly, the hub assembly 300 comprises a preferably elastic removable retaining element 328, such as a seeger ring, adapted to fix the first hub portion 302 to the second hub portion 304, as explained below.

Specifically, referencing FIGS. 4 and 5, the first hub portion 302 and the second hub portion 304 are formed so that, when the roller 100 is assembled, the first flange 310 and the second flange 318 abut respectively against the first base surface 206 and against the second base surface 208 of the sleeve 200.

Moreover, the first recesses 210 and the second recesses 212 of the sleeve 200 are engaged respectively by the first extensions 314, of the first hub portion 302, and by the second extensions 324, of the second hub portion 304. Specifically, the ends of the second extensions 324 abut against the first flange 310 of the first hub portion 302, while the ends of the first extensions 314 engage the respective grooves 326 of the second flange 318 of the second hub portion 304.

In this state, when the roller 100 is assembled, the thicknesses of the first abutment ring 308 and of the second abutment ring 322 are, preferably, such that, when the second opening of the hollow body 306 is engaged by the second abutment ring 322, the distance between the first abutment ring 308 and the second abutment ring 322 is equal to the sum of the thicknesses of the bearings 400 and of the spacer ring 402.

Moreover, the ends of the first extensions 314 protrude from the second flange 318 so that the removable retaining element 328 engages the engagement seats 316 of the first extensions 314 and, at the same time, abuts against the outer surface of the second flange 318. In this state, then, the removable retaining element 328 removably fixes the first hub portions 302 to the second hub portion 304 which, in turn, hold and are integral with the sleeve 200 by means of the coupling between the first recesses 210 and the second recesses 212 with, respectively, the first extensions 314 of the first hub portion 302 and the second extensions 324 of the second hub portion 304.

Lastly, the first through hole 312, the second through hole 320, respectively of the first flange 310 and of the second flange 318, are formed so as to have a diameter, or a section, preferably equal to that of the hole of the spacer ring 402 and of the bearings 400. Specifically, the diameter of these holes coincides with the diameter of the shaft of the apparatus on which the roller is installed 100.

Advantageously, with this configuration, the hub assembly 300 is removably fixed to the sleeve 200 by means of the removable retaining element 328 and, therefore, it is possible to assemble the elements of the roller 100 in a simple manner, as described previously, and to fix them to each other by means of the removable retaining element 328. Subsequently, it is possible to disassemble, or disengage, the roller 100 simply removing the removable retaining element 328, thereby making it possible to replace a sleeve 200, deteriorated as a result of its use.

Moreover, advantageously, the number and the dimensions of the recesses, first 210 and second 212, and of the corresponding extensions, first 314 and second 324, is set so as to have a fixing area, or a coupling area, of the hub assembly 300 to the sleeve 200 that is relatively extended with respect to the inner peripheral surface 204 which creates the contact between the sleeve 200 and the hollow body 306 of the hub assembly 300.

The sum of the contact surfaces between the recesses, first 210 and second 212, and the corresponding extensions, first 314 and second 324, defines the fixing area of the sleeve 200 to the hub assembly 300. In this state, in operating conditions, the forces exerted on the roller 100, induced by its rolling and by the pressure applied by the apparatus through the shaft on which it is installed, are transmitted on a relatively extended fixing area or coupling area and hence it is unlikely that these forces may be able to induce tearing of the material whereof the sleeve is made. In other words, the forces exerted on the roller 100, are mutually transmitted between the sleeve 200 and the hub assembly 300 homogeneously through the contact surfaces between the first recesses 210 and the first extensions 314 and through the contact surfaces between the second recesses 212 and the second extensions 324.

Moreover, advantageously, the first recesses 210 and the second recesses 212 are formed, respectively, on the first base surface 206 and on the second base surface 208 extending inside the body of the sleeve 200 in a direction parallel to the axis X-X. In this state, no angles are formed and hence it is unlikely, in operating conditions, that the material whereof the sleeve 200 is made may be torn. In other words, the first recesses 210 and the second recesses 212 do not form angles on the outer peripheral surface 202 and on the inner peripheral surface 204 of the sleeve 200, but form close contours at the openings of the first recesses 210 and of the second recesses 212 respectively on the first base surface 206 and on the second base surface 208.

Moreover, advantageously, the number and the dimensions of the recesses, first 210 and second 212, and of the corresponding extensions, first 314 and second 324, is set so as to have a fixing area, or a coupling area, of the hub assembly 300 to the sleeve 200 that is relatively extended with respect to the outer peripheral surface 202 of the sleeve 200. In this state, the characteristics of the sleeve 200, such as compressibility, are substantially homogeneous on the outer peripheral surface 202 of the sleeve 200.

Lastly, advantageously, the first flange 310 and the second flange 318 close the bearings 400 inside the cavity of the hollow body 306 and make it unlikely that the bearings may come in contact with processing substances or contaminating agents that are provided in operating conditions.

Referencing FIG. 3, the procedure for the assembly of the roller 100 is now described.

First of all, the bearings 400 and any spacer ring 402 are inserted inside the cavity of the hollow body 306 of the first hub portion 302 of the hub assembly 300.

Subsequently, the first hub portion 302 is coupled to the roller 200 so as to engage the inner peripheral surface 204 of the roller 200 with the outer peripheral surface of the hollow body 306 of the first hub portion 302.

Moreover, in this step, the first recesses 210 are engaged by the corresponding first extensions 314 so that the first flange 310 of the first hub portion 302 abuts against the first base surface 206.

Then, the second first hub portion 304 is coupled to the roller 200 so as to engage the second opening of the hollow body 306 by means of the second abutment ring 322.

Moreover, in this step, the second recesses 212 are engaged by the corresponding second extensions 324 so that the second flange 318 of the second hub portion 304 abuts against the second base surface 208.

Lastly, the first hub portion 302 is fixed to the second hub portion 304 engaging the outer surface of the second flange 318 and the engagement seats 316 of the first extensions 314 by means of the removable retaining element 328.

Possibly, to replace the roller 200 or the bearings 400, the roller 100 can be disassembled removing the removable retaining element 328 and disengaging the roller 200 from the first hub portion 302 and from the second hub portion 34 of the hub assembly 300.

It is clear that different modifications can be made to the roller 100 and to the quick release system of the present invention, without thereby departing from the scope of protection as defined by the independent claims.

Additional embodiments of the present invention, providing modifications relating to some of the elements comprised in the roller 100, are described below. Hence, the elements that are substantially unchanged will not be described again and the same numeral references will be used.

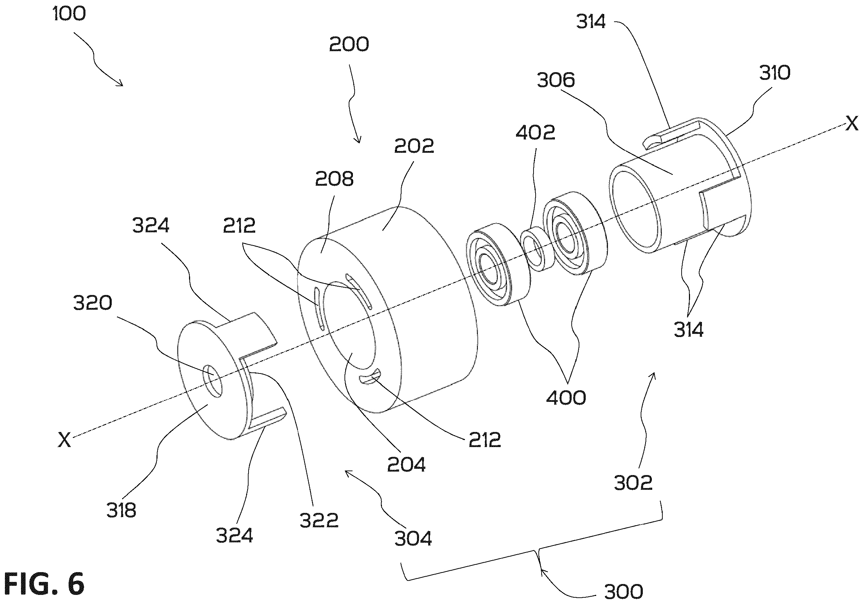

Referencing FIGS. 6, in an example not part of the invention, it is possible to provide a roller 100 in which the first recesses 210 and second recesses 212 are not through hole that connect between them the first base surface 206 and the second base surface 208 but have, instead, a depth, i.e. an extension along the direction parallel to the axis X-X, smaller than the distance between the first base surface 206 and the second base surface 208 of the sleeve 200. In other words, the first recesses 210 and second recesses 212 are blind holes.

In this state, the depth of the first recesses 210 and of the second recesses 212 can preferably be set so as to be at least equal to half the distance between the first base surface 206 and the second base surface 208 of the sleeve 200. Consequently, the first extensions 314 and the second extensions 324, respectively of the first hub portion 302 and of the second hub portion 304, are set to engage the respective recesses.

Alternatively, the depth of the first recesses 210 and of the second recesses 212 can be set so as to be smaller than half the distance between the first base surface 206 and the second base surface 208 of the sleeve 200. In this state the number of the first recesses 210 can be different from that of the second recesses 212 and their relative angular position, with respect to a rotation around the X-X axis, can be any relative angular position.

It is possible to provide a roller 100 in which the first recesses 210 and the second recesses 212 coincide. In this state, the length of the first extensions 314 and of the second extensions 324 of the hub assembly 300 is set so that their sum is at most equal to the distance between the first base surface 206 and the second base surface 208 of the sleeve 200.

The roller 100, in these possible variants, can also provide a fork, not shown, provided with two arms on whose ends the shaft of the apparatus is fixed. Specifically, the fork has a distance between its two arms preferably equal to the distance between the first flange 310 and the second flange 318, of the hub assembly 300 of the assembled roller 100, so as to serve as a retaining element adapted to hold the elements comprised in the roller 100, replacing the removable retaining element 328 previously described.

In examples not part of the invention, it is possible to provide a roller 100 in which the first hub portion 302 is removably fixed to the second hub portion 304 by removable fixing means. For example, it is possible to provide screws, as removable fixing means, that fix the second flange 318 of the second hub portion 304 to the hollow body 306 of the first hub portion 302. In this embodiment, the hollow body 306 provides appropriate fixing seats for the screws, such as threaded blind holes, for example at the edge of the second opening of the hollow body 306.

Alternatively, in an example not part of the invention, it is possible to provide a roller 100 in which the first flange 310 of the first hub portion 302 is not integral with the hollow body 306 and in which screws are provided, as removable fixing means, that fix the first flange 310 and the second flange 318 to the hollow body 306 of the first hub portion 302. In this embodiment, the hollow body 306 provides appropriate fixing seats for the screws, such as threaded blind holes, for example at the edge of the first and of the second opening of the hollow body 306.

Moreover, in the description of the first embodiment, the first recesses 210, the second recesses 212 and the corresponding first extensions 314 and second extensions 324 are three, and they are positioned so that their axes are at a relative angular distance of 60 degrees with respect to a rotation around the axis X-X. However, the number of the recesses and of the corresponding extensions can be any suitable value but the hub assembly 300 must necessarily comprise at least a first extension 314 of the first hub portion 302 and at least a second extension 324 of the second hub portion 304. In this configuration the angular distance between the axes of the first recess 210, of the second recess 212 and of the corresponding first extension 314 and second extension 324 is preferably 180 degrees with respect to a rotation around the axis X-X and they extend for a compatible angular interval. Moreover, in this configuration, the engagement seat 316 of the first extension 314 is preferably a through hole adapted to be engaged by the removable retaining element 328 which, in this configuration, is a retaining pin adapted to abut, moreover, against the outer surface of the second flange 318.

Moreover, it is possible to provide a roller 100 in which the removable retaining element 328 is a ring provided with a threaded edge and the engagement seats of the first extensions 314 are threaded seats. Specifically, in this embodiment, the removable retaining element 328, having the threaded edge, is configured to engage by screwing the threaded engagement seats 316 of the first extensions 314, so as to abut, when threaded, against the outer surface of the second flange 318.

Moreover, it is possible to provide a roller 100 in which on the peripheral edge of the first flange 310 and of the second flange 318, of the hub assembly 300, depart pins that extend parallel to the axis X-X and that are adapted to engage corresponding blind holes formed respectively on the first base surface and the second base surface 208 of the sleeve 200 so as to facilitate the alignment of the first hub portion 302 and of the second hub portion 304 with respect to the sleeve 200.

Lastly, in the previous description, the technique for forming the sleeve 200 and the hub assembly 300 was described as injection molding, however thermoforming or similar techniques are possible. Moreover, the elements that comprise the hub assembly 300 can be obtained by the combination of multiple forming techniques, for example the hollow body 306 and the first flange 310 can be formed separately with injection molding techniques and, subsequently, they are fixed to each other by welding techniques, such as vibration welding or laser beam welding.

From the description provided hitherto, it is readily apparent that important results have been achieved, overcoming the drawbacks of the state of the art, making it possible to make a roller 100 provided with a replaceable sleeve 200 and with a quick release hub assembly 300 so as to prevent the relative rotary and longitudinal motion between them, further avoiding the use of a gluing substance.

Moreover, the first flange 310 and the second flange 318 assure, by closing the bearings 400 inside the hollow body 306 that receives them, their protection with respect to processing substances, such as solvents, glues, dusts, or the like or with respect to contaminating agents.

Moreover, the first recesses 210 and the second recesses 212 are formed, respectively, on the first base surface 206 and on the second base surface 208 extending inside the body of the roller 200 in a direction parallel to the axis X-X, in this state, no angles are formed at the outer peripheral surface 202 and of the inner peripheral surface 204. Consequently, it is thus unlikely that tearing of the material whereof the sleeve 200 is made will be caused.

Moreover, the number and the dimensions of the recesses, first 210 and second 212, and of the corresponding extensions, first 314 and second 324, are set in the design stage so as to have a fixing area, or a coupling area, of the hub assembly 300 to the sleeve 200 that is relatively extended with respect to the inner peripheral surface 204 of contact between the sleeve 200 and the hollow body 306 of the hub assembly 300. In this way, in operating conditions, the forces exerted on the roller, induced by rolling and by the pressure of the roller, are transmitted on a relatively extended fixing area so as to prevent tearing of the material whereof the sleeve is made.

Moreover, the first recesses 114, the second recesses 212 and the corresponding first extensions 314 and second extensions 324 are substantially positioned at a constant distance from the outer peripheral surface 202 of the sleeve 200 and, consequently, the characteristics of the sleeve 200, such as compressibility or rigidity, are constant over the entire outer peripheral surface thereof.

Lastly, the roller 100 and the elements that comprise it can be produced in a simple manner with conventional techniques and procedures and their conformation allows simply to replace the sleeve 200 and/or the hub assembly 300.

Naturally, the materials and the equipment used to embody the present invention, as well as the shape and the dimensions of the individual components, can be the most suitable according to the specific needs following the appended claims.

## Claims

1. A roller (100) comprising a replaceable sleeve (200) and a hub assembly (300) for mounting said roller (100) on a shaft of an apparatus having a rotation axis (X-X),
said sleeve (200) having a body defined by an outer peripheral surface (202) and an inner peripheral surface (204) connected to each other by means of a first base surface (206) and a second base surface (208) perpendicular to said axis (X-X),
said hub assembly (300) comprising a hollow body (306) open along said axis (X-X), said hollow body (306) being adapted to engage said inner peripheral surface (204) of said sleeve (200) and being further adapted to receive at least a bearing (400) into its cavity
wherein
said sleeve (200) further comprises at least a first recess (210) and at least a second recess (212) formed respectively on said first base surface (206) and on said second base surface (208),
said at least a first recess (210) and said at least a second recess (212) extending parallel to said axis (X-X) inside the body of said sleeve (200) and spaced from said outer peripheral surface (202) and said inner peripheral surface (204), and
said hub assembly (300) further comprises a first flange (310) and a second flange (318) centrally drilled (312, 320) to receive said shaft and, furthermore, said first flange (310) and said second flange (318) being adapted to engage the openings of said cavity of said hollow body (306), **characterized in that**
said first flange (310) and said second flange (318) being provided, respectively, with at least a first extension (314) and at least a second extension (324) extending parallel to said axis (X-X) and radially spaced from said hollow body (306),
said at least a first extension (314) and said at least a second extension (324) being adapted to respectively engage said at least a first recess (210) and said at least a second recess (212) of said sleeve (200).

2. The roller (100) according to claim 1, wherein said at least a first recess (210) and said at least a second recess (212) extend for a length equal to the distance between said first base surface (206) and said second base surface (208) of said sleeve (200).

3. The roller (100) according to any of claims 1 or 2, wherein said at least a first recess (210) and said at least a second recess (212) are formed alternating with each other in angular positions equidistant with respect to a rotation around said axis (X-X), and said at least a first recess (210) and said at least a second recess (212) being at the same distance from said axis (X-X).

4. The roller (100) according to any of claims 2 or 3, wherein said at least a first extension (314) extends for a length greater than the distance between said first base surface (206) and said second base surface (208) of said sleeve (200), and
said at least a second extension (324) extends for a length equal to the distance between said first base surface (206) and said second base surface (208) of said sleeve (200).

5. The roller (100) according to claim 4, wherein said second flange (318) comprises at least a groove (326) adapted to be engaged by means of said at least a first extension (314) of said first flange (310).

6. The roller (100) according to any of claims 4 or 5, wherein said at least a first extension (314) comprises at the far end from said first flange (310) an engagement seat (316) adapted to be operably engaged by a removable retaining element (328), and
said removable retaining element (328) is also adapted to abut against said second flange (318) when engages said engagement seat (316).

7. The roller (100) according to claim 6, wherein said removable retaining element (328) is a ring provided with a threaded edge and said at least a first extension (314) comprises at the far end from said first flange (310) an engagement seat (316) provided with a thread adapted to cooperate with the threaded edge of said removable retaining element (328), and
said removable retaining element (328) is also adapted to abut against said second flange (318) when engages said engagement seat (316) by means of screwing.

8. The roller (100) according to any of claims 1 to 7, wherein said first flange (310) and said hollow body (306) are formed integral with each other.

9. The roller (100) according to any of claims 1 to 7, wherein at least one of said first flange (310) and said second flange (318) is fixed to said hollow body (306) by means of removable fixing means.

10. A replaceable sleeve (200) configured for being engaged by means of a hub assembly (300) according to claim 11 for mounting a roller (100) on a shaft of an apparatus having a rotation axis (X-X), said sleeve (200) having a body defined by an outer peripheral surface (202) and an inner peripheral surface (204) connected to each other by means of a first base surface (206) and a second base surface (208) perpendicular to said axis (X-X), said sleeve (200) further comprising at least a first recess (210) and at least a second recess (212) formed respectively on said first base surface (206) and on said second base surface (208), said at least a first recess (210) and said at least a second recess (212) extending parallel to said axis (X-X) inside the body of said sleeve (200) and spaced from said outer peripheral surface (202) and said inner peripheral surface (204), said at least a first recess (210) and said at least a second recess (212) being adapted to be engaged respectively by at least a first extension (314) and at least a second extension (324) of said hub assembly (300), wherein said recesses (210, 212) are through holes connecting said first base surface (206) to said second base surface (208), said sleeve (200) being formed in single piece with an elastomeric material.

11. A hub assembly (300) configured for engaging a sleeve (200) according to claim 10 for mounting a roller (100) on a shaft of an apparatus having a rotation axis (X-X), comprising a hollow body (306) open along said axis (X-X), said hollow body (306) being adapted to receive at least a bearing (400) into its cavity, wherein said hub assembly (300) further comprises a first hub portion (302) and a second hub portion (304) respectively comprising a first flange (310) and a second flange (318) having disc shape centrally drilled (312, 320) to receive said shaft, **characterized in that** said first flange (310) and said second flange (318) are adapted to respectively engage the openings of said cavity of said hollow body (306) so as to be coaxial to the latter, said first hub portion (302) and a second hub portion (304) comprising, respectively, a first abutment ring (308) and a second abutment ring (322) provided at said openings, said first flange (310) and said second flange (318) being further provided, respectively, with at least a first extension (314) and at least a second extension (324) extending parallel to said axis (X-X) and radially spaced from said hollow body (306), said at least a first extension (314) and said at least a second extension (324) being adapted to engage respectively at least a first recess (210) and at least a second recess (212) of said sleeve (200), wherein when engaged on the sleeve, in the mounted state, said at least a first extension (314) and said at least second extension (324) are provided in alternately angular positions each other with respect to a rotation around said axis(X-X).

## Patentansprüche

1. Walze (100), die eine austauschbare Hülse (200) und eine Naben-Baugruppe (300) zum Montieren der Walze (100) auf einer Welle einer Vorrichtung mit einer Drehachse (X-X) umfasst, wobei die Hülse (200) einen Körper aufweist, der durch eine Außenumfangsfläche (202) und eine Innenumfangsfläche (204) gebildet wird, die über eine erste Basisfläche (206) und eine zweite Basisfläche (208) senkrecht zu der Achse (X-X) miteinander verbunden sind, die Naben-Baugruppe (300) einen hohlen Körper (306) umfasst, der entlang der Achse (X-X) offen ist, wobei der hohle Körper (306) so eingerichtet ist, dass er mit der Innenumfangsfläche (204) der Hülse (200) in Eingriff kommt und des Weiteren so eingerichtet ist, dass er wenigstens ein Lager (400) in seinem Hohlraum aufnimmt,
wobei
die Hülse (200) des Weiteren wenigstens eine erste Aussparung (210) sowie wenigstens eine zweite Aussparung (212) umfasst, die an der ersten Basisfläche (206) bzw. an der zweiten Basisfläche (208) ausgebildet sind,
die wenigstens eine erste Aussparung (210) und die wenigstens eine zweite Aussparung (212) sich parallel zu der Achse (X-X) im Inneren des Körpers der Hülse (200) erstrecken und von der Außenumfangsfläche (202) und der Innenumfangsfläche (204) beabstandet sind, und
die Naben-Baugruppe (300) des Weiteren einen ersten Flansch (310) sowie einen zweiten Flansch (318) umfasst, die mittig gebohrt sind (312, 320), um die Welle aufzunehmen, und wobei darüber hinaus der erste Flansch (310) und der zweite Flansch (318) so eingerichtet sind, dass sie mit den Öffnungen des Hohlraums des hohlen Körpers (306) in Eingriff kommen, **dadurch gekennzeichnet, dass**
der erste Flansch (310) und der zweite Flansch (318) mit wenigstens einer ersten Verlängerung (314) bzw. wenigstens einer zweiten Verlängerung (324) versehen sind, die sich parallel zu der Achse (X-X) und radial beabstandet von dem Hohlkörper (306) erstrecken, die wenigstens eine erste Verlängerung (314) und die wenigstens eine zweite Verlängerung (324) so eingerichtet sind, dass sie mit der wenigstens einen ersten Aussparung (210) bzw. der wenigstens einen zweiten Aussparung (212) der Hülse (200) in Eingriff kommen.

2. Walze (100) nach Anspruch 1, wobei die wenigstens eine erste Aussparung (210) und die wenigstens eine zweite Aussparung (212) sich über eine Länge erstrecken, die dem Abstand zwischen der ersten Basisfläche (206) und der zweiten Basisfläche (208) der Hülse (200) gleich ist.

3. Walze (100) nach einem der Ansprüche 1 oder 2, wobei die wenigstens eine erste Aussparung (210) und die wenigstens eine zweite Aussparung (212) abwechselnd zueinander an Winkelpositionen ausgebildet sind, die in Bezug auf eine Drehung um die Achse (X-X) herum gleich weit entfernt sind, und die wenigstens eine erste Aussparung (210) sowie die wenigstens eine zweite Aussparung (212) den gleichen Abstand zu der Achse (X-X) haben.

4. Walze (100) nach einem der Ansprüche 2 oder 3, wobei sich die wenigstens eine erste Verlängerung (314) über eine Länge erstreckt, die größer ist als der Abstand zwischen der ersten Basisfläche (206) und der zweiten Basisfläche (208) der Hülse (200), und sich die wenigstens eine zweite Verlängerung (324) über eine Länge erstreckt, die dem Abstand zwischen der ersten Basisfläche (206) und der zweiten Basisfläche (208) der Hülse (200) gleich ist.

5. Walze (100) nach Anspruch 4, wobei der zweite Flansch (318) wenigstens eine Nut (326) aufweist, die so eingerichtet ist, dass sie mittels der wenigstens einen ersten Verlängerung (314) des ersten Flansches (310) in Eingriff gebracht wird.

6. Walze (100) nach einem der Ansprüche 4 oder 5, wobei die wenigstens eine erste Verlängerung (314) an dem von dem ersten Flansch (310) entfernten Ende eine Eingriffs-Aufnahme (316) umfasst, die so eingerichtet ist, dass sie mit einem abnehmbaren Halteelement (328) funktional in Eingriff gebracht wird, und
das abnehmbare Halteelement (328) auch so eingerichtet ist, dass es bei Eingriff mit der Eingriffs-Aufnahme (316) an dem zweiten Flansch (318) anliegt.

7. Walze (100) nach Anspruch 6, wobei das abnehmbare Halteelement (328) ein Ring ist, der mit einem Gewinde-Rand versehen ist, und die wenigstens eine erste Verlängerung (314) an dem von dem ersten Flansch (310) entfernten Ende eine Eingriffs-Aufnahme (316) umfasst, die mit einem Gewinde versehen ist, das so eingerichtet ist, dass es mit dem Gewinde-Rand des abnehmbaren Halteelementes (328) zusammenwirkt, und
das abnehmbare Halteelement (328) auch so eingerichtet ist, dass es bei Eingriff mit der Eingriffs-Aufnahme (316) mittels Schrauben an dem zweiten Flansch (318) anliegt.

8. Walze (100) nach einem der Ansprüche 1 bis 7, wobei der erste Flansch (310) und der hohle Körper (306) integral miteinander ausgebildet sind.

9. Walze (100) nach einem der Ansprüche 1 bis 7, wobei der erste Flansch (310) oder/und der zweite Flansch (318) mittels abnehmbarer Befestigungseinrichtungen an dem hohlen Körper (306) befestigt ist/sind.

10. Austauschbare Hülse (200), die so ausgeführt ist, dass sie mittels einer Naben-Baugruppe (300) nach Anspruch 11 zum Anbringen einer Walze (100) an einer Welle einer Vorrichtung mit einer Drehachse (X-X) in Eingriff gebracht wird, wobei die Hülse (200) einen Körper aufweist, der durch eine Außenumfangsfläche (202) und eine Innenumfangsfläche (204) gebildet wird, die über eine erste Basisfläche (206) und eine zweite Basisfläche (208) senkrecht zu der Achse (X-X) miteinander verbunden sind, die Hülse (200) des Weiteren wenigstens eine erste Aussparung (210) sowie wenigstens eine zweite Aussparung (212) umfasst, die an der ersten Basisfläche (206) bzw. an der zweiten Basisfläche (208) ausgebildet sind, die wenigstens eine erste Aussparung (210) und die wenigstens eine zweite Aussparung (212) sich parallel zu der Achse (X-X) im Inneren des Körpers der Hülse (200) erstrecken und von der Außenumfangsfläche (202) sowie der Innenumfangsfläche (204) beabstandet sind, die wenigstens eine erste Aussparung (210) und die wenigstens eine zweite Aussparung (212) so eingerichtet sind, dass sie mit wenigstens einer ersten Verlängerung (314) bzw. wenigstens einer zweiten Verlängerung (324) der Naben-Baugruppe (300) in Eingriff gebracht werden, und die Aussparungen (210, 212) Durchgangslöcher sind, die die erste Basisfläche (206) mit der zweiten Basisfläche (208) verbinden, und die Hülse (200) als ein Teil aus einem Elastomermaterial ausgebildet ist.

11. Naben-Baugruppe (300), die so ausgeführt ist, dass sie zum Anbringen einer Walze (100) an einer Welle einer Vorrichtung mit einer Drehachse (X-X) mit einer Hülse (200) nach Anspruch 10 in Eingriff kommt, wobei sie einen hohlen Körper (306) umfasst, der entlang der Achse (X-X) offen ist, der hohle Körper (306) so eingerichtet ist, dass er wenigstens ein Lager (400) in seinem Hohlraum aufnimmt, die Naben-Baugruppe (300) des Weiteren einen ersten Nabenabschnitt (302) und einen zweiten Nabenabschnitt (304) umfasst, die einen ersten Flansch (310) bzw. einen zweiten Flansch (318) in Scheibenform umfassen, die mittig gebohrt (312, 320) sind, um die Welle aufzunehmen, **dadurch gekennzeichnet, dass** der erste Flansch (310) und der zweite Flansch (318) so eingerichtet sind, dass sie jeweils so in die Öffnungen des Hohlraums des hohlen Körpers (306) eingreifen, dass sie koaxial dazu sind, der erste Nabenabschnitt (302) und der zweite Nabenabschnitt (304) einen ersten Anschlag-Ring (308) bzw. einen zweiten Anschlag-Ring (322) umfassen, die an den Öffnungen vorhanden sind, wobei der erste Flansch (310) und der zweite Flansch (318) des Weiteren mit wenigstens einer ersten Verlängerung (314) bzw. wenigstens einer zweiten Verlängerung (324) versehen sind, die sich parallel zu der Achse (X-X) und radial beabstandet von dem hohlen Körper (306) erstrecken, die wenigstens eine erste Verlängerung (314) und die wenigstens eine zweite Verlängerung (324) so eingerichtet sind, dass sie in die wenigstens eine erste Aussparung (210) bzw. die wenigstens eine zweite Aussparung (212) der Hülse (200) eingreifen, und die wenigstens eine erste Verlängerung (314) sowie die wenigstens eine zweite Verlängerung (324) bei Eingriff mit der Hülse in dem montierten Zustand an einander abwechselnden Winkelpositionen in Bezug auf eine Drehung um die Achse (X-X) herum vorhanden sind.

## Revendications

1. Rouleau (100) comprenant un manchon remplaçable (200) et un ensemble de moyeu (300) pour monter ledit rouleau (100) sur un arbre d'un appareil ayant un axe de rotation (X-X), ledit manchon (200) ayant un corps défini par une surface périphérique externe (202) et une surface périphérique interne (204) reliées l'une à l'autre au moyen d'une première surface de base (206) et d'une seconde surface de base (208) perpendiculaires audit axe (X-X), ledit ensemble de moyeu (300) comprenant un corps creux (306) ouvert le long dudit axe (X-X), ledit corps creux (306) étant adapté pour engager ladite surface périphérique interne (204) dudit manchon (200) et étant en outre adapté pour recevoir au moins un palier (400) dans sa cavité, dans lequel ledit manchon (200) comprend en outre au moins un premier évidement (210) et au moins un second évidement (212) formés respectivement sur ladite première surface de base (206) et sur ladite seconde surface de base (208), ledit au moins un premier évidement (210) et ledit au moins un second évidement (212) s'étendant parallèlement audit axe (X-X) à l'intérieur du corps dudit manchon (200) et étant espacés de ladite surface périphérique externe (202) et de ladite surface périphérique interne (204), et ledit ensemble de moyeu (300) comprend en outre une première bride (310) et une seconde bride (318) percées centralement (312, 320) pour recevoir ledit arbre et, en outre, ladite première bride (310) et ladite seconde bride (318) étant adaptées pour engager les ouvertures de ladite cavité dudit corps creux (306), **caractérisé en ce que** ladite première bride (310) et ladite second bride (318) étant pourvues, respectivement, d'au moins un premier prolongement (314) et d'au moins un second prolongement (324 ) s'étendant parallèlement audit axe (X-X) et espacés radialement dudit corps creux (306), ledit au moins un premier prolongement (314) et ledit au moins un second prolongement (324) étant adaptés pour engager respectivement ledit au moins un premier évidement (210) et ledit au moins un second évidement (212) dudit manchon (200).

2. Rouleau (100) selon la revendication 1, dans lequel ledit au moins un premier évidement (210) et ledit au moins un second évidement (212) s'étendent sur une longueur égale à la distance entre ladite première surface de base (206) et ladite second surface de base (208) dudit manchon (200).

3. Rouleau (100) selon l'une quelconque des revendications 1 ou 2, dans lequel ledit au moins un premier évidement (210) et ledit au moins un second évidement (212) sont formés en alternance l'un avec l'autre dans des positions angulaires équidistantes par rapport à une rotation autour dudit axe (X-X), et ledit au moins un premier évidement (210) et ledit au moins un second évidement (212) étant à la même distance dudit axe (X-X).

4. Rouleau (100) selon l'une quelconque des revendications 2 ou 3, dans lequel ledit au moins un premier prolongement (314) s'étend sur une longueur supérieure à la distance entre ladite première surface de base (206) et ladite seconde surface de base (208) dudit manchon (200), et ledit au moins un second prolongement (324) s'étend sur une longueur égale à la distance entre ladite première surface de base (206) et ladite seconde surface de base (208) dudit manchon (200).

5. Rouleau (100) selon la revendication 4, dans lequel ladite seconde bride (318) comprend au moins une rainure (326) adaptée pour être engagée au moyen dudit au moins un premier prolongement (314) de ladite première bride (310).

6. Rouleau (100) selon l'une quelconque des revendications 4 ou 5, dans lequel ledit au moins un premier prolongement (314) comprend à l'extrémité éloignée de ladite première bride (310) un siège d'engagement (316) adapté pour être engagé de manière fonctionnelle par un élément de retenue amovible (328), et
ledit élément de retenue amovible (328) est aussi adapté pour venir en butée contre ladite seconde bride (318) lorsqu'il s'engage avec ledit siège d'engagement (316).

7. Rouleau (100) selon la revendication 6, dans lequel ledit élément de retenue amovible (328) est un anneau pourvu d'un bord fileté et ledit au moins un premier prolongement (314) comprend à l'extrémité éloignée de ladite première bride (310) un siège d'engagement (316) pourvu d'un filetage adapté pour coopérer avec le bord fileté dudit élément de retenue amovible (328), et
ledit élément de retenue amovible (328) est aussi adapté pour venir en butée contre ladite seconde bride (318) lorsqu'il s'engage dans ledit siège d'engagement (316) par vissage.

8. Rouleau (100) selon l'une quelconque des revendications 1 à 7, dans lequel ladite première bride (310) et ledit corps creux (306) sont formés d'un seul tenant l'un avec l'autre.

9. Rouleau (100) selon l'une quelconque des revendications 1 à 7, dans lequel au moins l'une de ladite première bride (310) et de ladite seconde bride (318) est fixée audit corps creux (306) par des moyens de fixation amovibles.

10. Manchon remplaçable (200) conçu pour être engagé au moyen d'un ensemble de moyeu (300) selon la revendication 11 pour monter un rouleau (100) sur un arbre d'un appareil ayant un axe de rotation (X-X), ledit manchon (200) ayant un corps défini par une surface périphérique externe (202) et une surface périphérique interne (204) reliées l'une à l'autre au moyen d'une première surface de base (206) et d'une seconde surface de base (208) perpendiculaires audit axe (X-X), ledit manchon (200) comprenant en outre au moins un premier évidement (210) et au moins un second évidement (212) formés respectivement sur ladite première surface de base (206) et sur ladite second surface de base (208), ledit au moins un premier évidement (210) et ledit au moins un second évidement (212) s'étendant parallèlement audit axe (X-X) à l'intérieur du corps dudit manchon (200) et étant espacés de ladite surface périphérique externe (202) et de ladite surface périphérique interne (204), ledit au moins un premier évidement (210) et ledit au moins un second évidement (212) étant adaptés pour être engagés respectivement par au moins un premier prolongement (314) et au moins un second prolongement (324) dudit ensemble de moyeu (300), dans lequel lesdits évidements (210, 212) sont des trous traversants connectant ladite première surface de base (206) à ladite seconde surface de base (208), ledit manchon (200) étant formé d'un seul tenant avec un matériau élastomère.

11. Ensemble de moyeu (300) adapté pour engager un manchon (200) selon la revendication 10 pour monter un rouleau (100) sur un arbre d'un appareil ayant un axe de rotation (X-X), comprenant un corps creux (306) ouvert le long dudit axe (X-X), ledit corps creux (306) étant adapté pour recevoir au moins un palier (400) dans sa cavité, dans lequel ledit ensemble de moyeu (300) comprend en outre une première partie de moyeu (302) et une seconde partie de moyeu (304) comprenant respectivement une première bride (310) et une seconde bride (318) en forme de disque et percées centralement (312, 320) pour recevoir ledit arbre, **caractérisé en ce que** ladite première bride (310) et ladite seconde bride (318) sont adaptées pour engager respectivement les ouvertures de ladite cavité dudit corps creux (306) de manière à être coaxiales à ce dernier, ladite première partie de moyeu (302) et une seconde partie de moyeu (304) comprenant respectivement un premier anneau de butée (308) et un second anneau de butée (322) au niveau desdites ouvertures, ladite première bride (310) et ladite second bride (318) étant en outre pourvues respectivement d'au moins un premier prolongement (314) et d'au moins un second prolongement (324) s'étendant parallèlement audit axe (X-X) et étant espacées radialement dudit corps creux (306), ledit au moins un premier prolongement (314) et ledit au moins un second prolongement (324) étant adaptés pour s'engager respectivement dans au moins un premier évidement (210) et au moins un second évidement (212) dudit manchon (200), dans lequel lorsqu'engagés dans le manchon, dans l'état monté, ledit un moins un premier prolongement (314) et ledit au moins un second prolongement (324) sont fournis à des positions angulaires alternées l'un avec l'autre par rapport à une rotation autour dudit axe (X-X).
